# EUROPÄISCHE PATENTSCHRIFT

(11) **EP 2 191 996 B1**
(45) Veröffentlichungstag und Bekanntmachung des Hinweises auf die Patenterteilung: **20.06.2012**
(21) Anmeldenummer: 09013821.5
(22) Anmeldetag: 03.11.2009
(51) Int. Cl.: B60K 25/00

(54) **Mobile Arbeitsmaschine, insbesondere Flurförderzeug, und Verfahren zum Betreiben der mobilen Arbeitsmaschine**
Mobile work machine, in particular industrial truck and method for operating the mobile work machine
Machine de travail mobile, notamment chariot de manutention et procédé de fonctionnement de la machine de travail mobile

(30) Priorität: 27.11.2008 DE 102008059181
(43) Veröffentlichungstag der Anmeldung: 02.06.2010
(73) Patentinhaber: STILL GmbH, 22113 Hamburg (DE)
(72) Erfinder: Ziel, Ronald, 21526 Hohenhorn (DE); Schwab, Markus, 23879 Mölln (DE)
(74) Vertreter: Geirhos, Johann

(56) Entgegenhaltungen:
- EP-A- 0 945 619
- EP-A- 1 571 339
- JP-A- 2008 196 673

## Beschreibung

Die Erfindung betrifft eine mobile Arbeitsmaschine, insbesondere ein Flurförderzeug, mit mindestens einer Hydraulikpumpe zur Versorgung mindestens eines Verbrauchers, insbesondere einer Arbeitshydraulik, wobei die Hydraulikpumpe mit einem einen drehzahlabhängigen Drehmomentverlauf aufweisenden Verbrennungsmotor in einer zum Antrieb vorgesehenen Verbindung steht wobei die Hydraulikpumpe im Drehmoment derart regelbar ausgebildet ist, dass ihr Drehmoment an den Drehmomentverlauf des Verbrennungsmotors anpassbar ist.

Ferner betrifft die Erfindung ein Verfahren zum Betreiben einer solchen mobilen Arbeitsmaschine.

Mobile Arbeitsmaschinen verfügen üblicherweise über eine von einem Verbrennungsmotor angetriebene Hydraulikpumpe, welche mindestens einen Verbraucher, zum Beispiel eine Arbeitshydraulik, versorgt. Bei Flurförderzeugen, zum Beispiel Gegengewichtsgabelstaplern, wird meist ein Dieselmotor oder Treibgasmotor als Verbrennungsmotor eingesetzt, der insbesondere eine im Fördervolumen verstellbare Hydraulikpumpe antreibt. Die Hydraulikpumpe liefert hydraulische Energie für einen als Arbeitshydraulik ausgebildeten Hydraulikkreislauf, der beispielsweise Hub- und/oder Neigezylinder eines Hubmastes versorgt. Zudem kann die Hydraulikpumpe zur Versorgung einer hydraulischen Lenkungseinrichtung der Arbeitsmaschine vorgesehen sein. Zusätzlich stellt der Verbrennungsmotor üblicherweise auch noch Energie für einen Fahrantrieb zur Verfügung. Dabei kann der Fahrantrieb zum Beispiel hydraulisch oder elektrisch erfolgen. Im ersten Fall treibt der Verbrennungsmotor ebenfalls eine Hydraulikpumpe an, die hydraulische Antriebsmotoren mit hydraulischer Energie versorgt. Im letztgenannten Fall ist der Verbrennungsmotor mit einem Generator verbunden, der die vom Verbrennungsmotor erzeugte mechanische Energie in elektrische Energie umwandelt, mit der mindestens ein elektrischer Fahrmotor betrieben wird. Diese Antriebsvariante wird auch als Hybridantrieb bezeichnet. Eine solche mobile Arbeitsmaschine ist zum Beispiel in der DE 10 2007 014 642 A1 beschrieben.

Um ein effektives Zusammenspiel von Verbrennungsmotor und Hydraulikpumpe zu gewährleisten, müssen beide Komponenten aufeinander abgestimmt sein. Die Auslegung des Maximalvolumens der Hydraulikpumpe wird entscheidend durch den Drehmomentverlauf des Verbrennungsmotors im Bereich der unteren Leerlaufdrehzahl bestimmt. Der Drehmomentverlauf eines Verbrennungsmotors in Abhängigkeit von der Motordrehzahl wird auch als Drehmomentkennlinie bezeichnet. Drehmomentkennlinien von Verbrennungsmotoren haben charakteristische Verläufe. Insbesondere fallen sie zur Leerlaufdrehzahl hin ab. Das maximale von der Hydraulikpumpe abgeforderte Drehmoment wird durch den maximalen Systemdruck und das maximale Pumpenvolumen bestimmt und muss unterhalb des Verbrennungsmotordrehmoments bei Leerlaufdrehzahl liegen. Dies ist darin begründet, dass das Ansprechverhalten einer Hydraulikpumpe, insbesondere einer Hydraulikpumpe mit hydraulischer Verstellung des Fördervolumens (rein hydraulische Verstellpumpe), in der Regel um ein Vielfaches größer als die des Verbrennungsmotors ist (Faktor 1/10). Die Folge einer überdimensionierten rein hydraulischen Verstellpumpe ist ein starker Drehzahleinbruch beziehungsweise ein Abwürgen des Verbrennungsmotors bei plötzlicher Vollbetätigung der Arbeitshydraulik aus dem Leerlauf heraus. Dies geschieht, da die hohe Dynamik der Hydraulikpumpe zu schnell ein überhöhtes Drehmoment vom Verbrennungsmotor abfordert. Aufgrund der dadurch notwendigen Unterdimensionierung des maximalen Pumpenvolumens sind überhöhte Verbrennungsmotordrehzahlen notwendig, um das notwendige Fördervolumen für die zu erreichenden Leistungsdaten darzustellen. Diese Motordrehzahlen liegen in einem nicht verbrauchs- und geräuschemissionsoptimalen Arbeitsbereich des Verbrennungsmotors.

Aus der JP 2008 196673 A ist eine Regelung eines Pumpendrehmoments in einer Gesamtheit mehrerer Pumpen bekannt.

Der vorliegenden Erfindung liegt die Aufgabe zugrunde, eine mobile Arbeitsmaschine der eingangs genannten Art sowie ein Verfahren zum Betreiben der Arbeitsmaschine so auszugestalten, dass ein verbessertes Zusammenwirken von Verbrennungsmotor und Hydraulikpumpe ermöglicht wird.

Die Aufgabe wird bezüglich der mobilen Arbeitsmaschine dadurch gelöst, dass die Hydraulikpumpe im Drehmoment derart regelbar ausgebildet ist, dass Ihr Drehmoment an den Drehmomentverlauf des Verbrennungsmotors anpassbar ist. Zweckmäßigerweise ist die Hydraulikpumpe im Fördervolumen verstellbar. Zur Regelung des Drehmoments der verstellbaren Hydraulikpumpe ist in diesem Fall das Fördervolumen vorteilhafterweise auf einen veränderlich einstellbaren Maximalwert begrenzbar.

Dabei geht die Erfindung von der Überlegung aus, dass durch eine Annäherung der Drehmomentverläufe von Verbrennungsmotor und Hydraulikpumpe Motorcharakteristik und Pumpencharakteristik vorteilhaft aufeinander abgestimmt werden können. Eine Unterdimensionierung der Hydraulikpumpe zur Vermeidung einer Überforderung des Verbrennungsmotors ist somit nicht mehr erforderlich. Während eine herkömmliche Hydraulikpumpe ein über die Drehzahl im Wesentlichen konstantes Drehmoment aufweist, steigt das Drehmoment des Verbrennungsmotors bei niedriger Drehzahl stark an, erreicht bei einer mittleren Drehzahl ein Maximum und fällt zur Drehzahlobergrenze hin wieder ab. Durch Regelung des Drehmoments der Hydraulikpumpe wird nun nach dem Erfindungsgedanken anstelle eines konstanten Drehmomentverlaufs ein dem bergartigen Drehmomentverlauf des Verbrennungsmotors angepasster Drehmomentverlauf erreicht, wodurch ein deutlich verbessertes Zusammenspiel zwischen Verbrennungsmotor und Hydraulikpumpe ermöglicht wird. Hierdurch kann sowohl die Leerlaufdrehzahl als auch der Drehzahlarbeitspunkt für den Verbraucher, insbesondere die Arbeitshydraulik, zu niedrigeren Drehzahlen des Verbrennungsmotors hin verschoben werden. Dabei ist der Maximalwert des Fördervolumens bevorzugt elektrisch einstellbar. Es wird also der herkömmlicherweise bei verstellbaren Hydraulikpumpen vorgesehenen hydraulischen Verstellbarkeit des Fördervolumens eine elektrische Regelung, insbesondere Begrenzung, des maximalen Fördervolumens der Hydraulikpumpe überlagert

In einer besonders bevorzugten Ausführungsform der Erfindung ist die Hydraulikpumpe als Axialkolbenpumpe mit schwenkbarer Schrägscheibe ausgebildet, wobei zur Einstellung des maximal zulässigen Fördervolumens der Hydraulikpumpe der Schwenkwinkel der Schrägscheibe auf einen veränderlich einstellbaren Maximalwert begrenzbar ist Insbesondere ist es durch den Einsatz einer Hydraulikpumpe mit überlagerter elektroproportlonaler Schwenkwinkelregelung möglich, den Drehmomentverlauf der Hydraulikpumpe an den Drehmomentverlauf des Verbrennungsmotors optimal anzupassen. Dies wird dadurch erreicht, dass das maximale Fördervolumen der Hydraulikpumpe und somit das maximal abgeforderte Pumpendrehmoment über den Schwenkwinkel der verstellbaren Hydraulikpumpe elektrisch begrenzt und somit der Drehmomentverlauf der Hydraulikpumpe an den Drehmomentverlauf des Verbrennungsmotors angepasst wird.

Zur Drehmomentregelung ist zweckmäßigerweise mindestens eine Steuereinheit vorgesehen, die in Wirkverbindung mit einem Motorsteuergerät des Verbrennungsmotors und mit einer Einstelleinrichtung der Hydraulikpumpe zur Einstellung des maximal zulässigen Fördervolumens der Hydraulikpumpe steht.

Gemäß einer Weiterbildung des Erfindungsgedankens steht die Steuereinheit zusätzlich in Wirkverbindung mit einer Fahrantriebseinheit der mobilen Arbeitsmaschine. Auf diese Weise kann bei einer verbrennungsmotorisch betriebenen Arbeitsmaschine, zum Beispiel einem Flurförderzeug, mit elektrischer Leistungsübertragung zur Antriebsachse eine abgestimmte beziehungsweise priorisierte Leistungsflussanpassung entweder in die Arbeitshydraulik oder in den Fahrantrieb erfolgen.

Die Erfindung betrifft ferner ein Verfahren zum Betreiben einer mobilen Arbeitsmaschine, insbesondere eines Flurförderzeugs, wobei mindestens eine Hydraulikpumpe zur Versorgung mindestens eines Verbrauchers, insbesondere einer Arbeitshydraulik, von einem Verbrennungsmotor mit einem drehzahlabhängigen Drehmomentverlauf angetrieben wird.

Verfahrensseitig wird die gestellte Aufgabe dadurch gelöst, dass die Hydraulikpumpe im Drehmoment derart geregelt wird, dass ihr Drehmoment an den Drehmomentverlauf des Verbrennungsmotors angepasst wird.

Zweckmäßigerweise wird eine Hydraulikpumpe mit verstellbarem Fördervolumen verwendet und das Drehmoment der Hydraulikpumpe an den Drehmomentverlauf des Verbrennungsmotors angepasst, indem das verstellbare Fördervolumen der Hydraulikpumpe auf einen von der Drehzahl des Verbrennungsmotors abhängigen Maximalwert begrenzt wird.

Gemäß einer besonders bevorzugten Ausgestaltung der Erfindung wird eine als Axialkolbenpumpe mit schwenkbarer Schrägscheibe ausgebildete Hydraulikpumpe verwendet. Zur Einstellung des maximalen Fördervolumens der Hydraulikpumpe wird in diesem Fall der maximal zulässige Schwenkwinkel der Schrägscheibe in Abhängigkeit von der Drehzahl des Verbrennungsmotors begrenzt.

Vorteilhafterweise wird eine hydraulisch im Fördervolumen verstellbare Hydraulikpumpe verwendet. Dabei wird zur Drehmomentregelung der Hydraulikpumpe der hydraulischen Verstellung des Fördervolumens eine Regelung des zulässigen Maximalwerts des Fördervolumens in Abhängigkeit von der Drehzahl des Verbrennungsmotors überlagert.

Bei Verwendung einer Axialkolbenpumpe mit hydraulisch schwenkbarer Schrägscheibe als verstellbare Hydraulikpumpe wird der hydraulischen Schwenkwinkelverstellung bevorzugt eine elektroproportionale Schwenkwinkelregelung zur Begrenzung des Schwenkwinkels der Schrägscheibe auf einen maximal zulässigen Wert in Abhängigkeit von der Drehzahl des Verbrennungsmotors überlagert.

Die Erfindung eignet sich für alle denkbaren mobilen Arbeitsmaschinen, bei denen eine Hydraulikpumpe von einem Verbrennungsmotor angetrieben wird. Dazu zählen zum Beispiel Baumaschinen ebenso wie Flurförderzeuge. Ganz besondere Vorteile ergeben sich beim Einsatz der Erfindung in verbrennungsmotorisch betriebenen Flurförderzeugen, insbesondere Gegengewichtsgabelstaplern, mit elektrischer Leistungsübertragung zur Antriebsachse und mittels verstellbarer Hydraulikpumpe versorgter Arbeitshydraulik.

Ein besonderer Vorteil der Erfindung besteht insbesondere darin, dass der Leistungsfluss in die Arbeitshydraulik durch ein Regelorgan der momentan möglichen Leistungsabgabe des Verbrennungsmotors angepasst werden kann. Hierdurch ergibt sich ein günstigerer Betriebspunkt des Verbrennungsmotors hinsichtlich seines Wirkungsgrades, was mit einem geringeren Kraftstoffverbrauch verbunden ist. Ein niedrigeres Drehzahlniveau führt auch zu einer geringeren Geräuschemission und somit zu einer geringeren physischen Belastung des Fahrers.

Darüber hinaus ergeben sich Vorteile daraus, dass in der Arbeitshydraulik auf komplizierte Wegeventilblöcke mit integrierten volumenstrombegrenzenden Ventilen bzw. Blenden verzichtet werden kann, da das Pumpenvolumen und somit der Volumenstrom der einzelnen Verbraucher der Arbeitshydraulik durch die elektroproportionale Schwenkwinkelregelung der Hydraulikpumpe exakt zu definieren ist.

Weitere Vorteile und Einzelheiten der Erfindung werden anhand der in den schematischen Figuren dargestellten Ausführungsbeispiele näher erläutert. Hierbei zeigt
- Figur 1: die Drehmomentkennlinien von Verbrennungsmotor und rein hydraulischer Verstellpumpe gemäß Stand der Technik,
- Figur 2: die Drehmomentkennlinien von Verbrennungsmotor und erfindungsgemäßer elektrohydraulischer Verstellpumpe und
- Figur 3: ein Schaltschema eines verbrennungsmotorisch betriebenen Flurförderzeugs mit einer elektrischen Leistungsübertragung zur Antriebsachse.

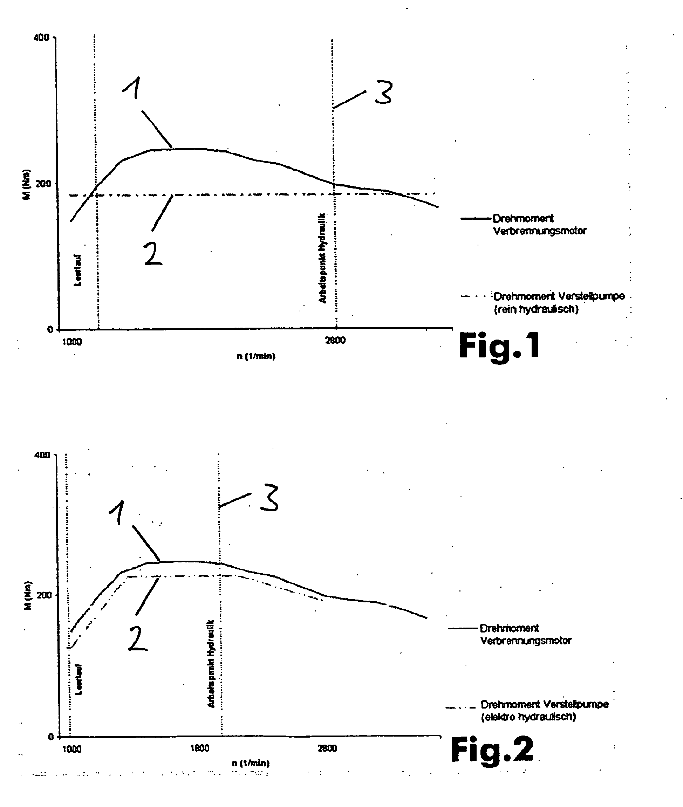

In Figur 1 ist das Drehmoment M (Nm) eines Verbrennungsmotors einer als Flurförderzeug ausgebildeten mobilen Arbeitsmaschine in Abhängigkeit von der Motordrehzahl n (1/min) als durchgehende Linie 1 dargestellt. Das Drehmoment des Verbrennungsmotors steigt ab der Lehrlaufdrehzahl des Verbrennungsmotors stark an, erreicht im mittleren Drehzahlbereich ein Maximum und fällt zur Höchstdrehzahl hin ab. Dagegen bleibt das Drehmoment der Hydraulikpumpe des Standes der Technik mit hydraulischer Druckförderstromregelung (rein hydraulische Verstellpumpe) über den gesamten Drehzahlbereich konstant. Der Drehmomentverlauf der rein hydraulischen Verstellpumpe ist hierbei als gestrichelte Linie 2 dargestellt. Der Drehmomentverlauf in Abhängigkeit von der Motordrehzahl wird auch als Drehmomentkennlinie bezeichnet. Das maximal von der rein hydraulischen Verstellpumpe abgeforderte Drehmoment muss unterhalb des Drehmoments des Verbrennungsmotors bei Lehrlaufdrehzahl sein, damit der Verbrennungsmotor bei plötzlicher voller Betätigung der Arbeitshydraulik aus dem Leerlauf heraus nicht abgewürgt wird. Die rein hydraulische Pumpenverstellung weist nämlich ein viel dynamischeres Ansprechverhalten auf als der Verbrennungsmotor (Faktor ca. 1/10). Daher würde eine zu groß dimensionierte hydraulische Verstellpumpe zu schnell ein überhöhtes Drehmoment vom Verbrennungsmotor abfordern. Um dies zu vermeiden, muss das maximale Pumpenvolumen der rein hydraulischen Verstellpumpe nach dem Stand der Technik so dimensioniert sein, dass das über den gesamten Drehzahlbereich konstante Pumpendrehmoment ab der Lehrlaufdrehzahl des Verbrennungsmotors unterhalb des Drehmoments des Verbrennungsmotors liegt. Dies hat aber zur Folge, dass überhöhte Verbrennungsmotordrehzahlen notwendig sind, um das von der Arbeitshydraulik geforderte Fördervolumen zur Verfügung stellen zu können. Die maximale Leistung der Arbeitshydraulik kann deswegen erst bei hohen Drehzahlen des Verbrennungsmotors erreicht werden. Dieser sogenannte Drehzahlarbeitspunkt 3 für die Arbeitshydraulik liegt im vorliegenden Ausführungsbeispiel bei 2800 Umdrehungen pro Minute (U/min). Besonders nachteilig ist dabei, dass diese Motordrehzahl insbesondere bei den in Flurförderzeugen üblicherweise eingesetzten Dieselmotoren in einem nicht verbrauchs-und geräuschemissionsoptimalen Bereich des Verbrennungsmotors liegt.

In Figur 2 sind die Drehmomentverläufe eines Verbrennungsmotors und einer erfindungsgemäßen elektrohydraulischen Verstellpumpe dargestellt. Mit dem Einsatz einer als Axialkolbenpumpe ausgebildeten Hydraulikpumpe mit überlagerter elektroproportionaler Schwenkwinkelregelung (elektrohydraulische Verstellung) wird erreicht, dass die Drehmomentkennlinie 2 der Hydraulikpumpe an die Drehmomentkennlinie 1 des Verbrennungsmotors angepasst wird. Dies geschieht dadurch, dass das maximale Pumpenvolumen und somit das maximal abgeforderte Pumpendrehmoment über den Schwenkwinkel der Hydraulikpumpe elektrisch begrenzt wird. Hierdurch kann sowohl die Lehrlaufdrehzahl als auch der Drehzahlarbeitspunkt für die Arbeitshydraulik zu niedrigeren Drehzahlen des Verbrennungsmotors hin verschoben werden. Im vorliegenden Ausführungsbeispiel liegt der Drehzahlarbeitspunkt 3 für die Arbeitshydraulik etwas oberhalb von 1800 U/min. In diesem Drehzahlbereich arbeitet insbesondere ein als Dieselmotor ausgebildeter Verbrennungsmotor mit hohem Wirkungsgrad. Daher kann dieser besonders verbrauchs- und geräuscharm betrieben werden, was auch zu einer geringeren physischen Belastung des Fahrers führt.

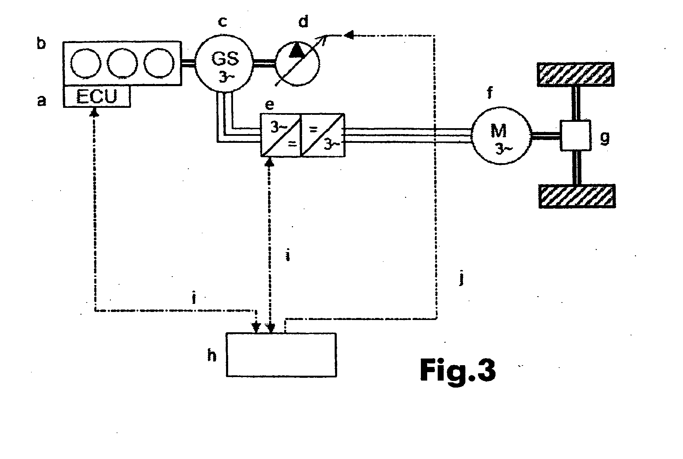

Figur 3 zeigt ein Schaltschema einer erfindungsgemäßen, verbrennungsmotorisch betriebenen Arbeitsmaschine, insbesondere eines Flurförderzeugs, mit elektrischer Leistungsübertragung zur Antriebsachse und somit einem elektrischen Fahrantrieb. Der Verbrennungsmotor a mit einem Motorsteuergerät b zur Drehzahlsteuerung ist direkt mechanisch mit einem Drehstromgenerator c, beispielsweise einem pemnanenterregten Synchrongenerator, und der Hydraulikpumpe d mit elektroproportionaler Schwenkwinkelregelung für die Versorgung der nicht näher dargestellten Arbeitshydraulik gekoppelt. Ein mit dem Drehstromgenerator c verbundener Fahrumrichter e, versorgt einen Fahrmotor f, beispielsweise eine Asynchron-Drehstrommaschine, wobei der Fahrmotor f eine mit Antriebsrädern versehene Antriebsachse g mit einem mechanischen Getriebe antreibt, die den Fahrantrieb bildet. Die zentrale Steuereinheit h erhält über Bussysteme i Informationen zu Betriebszuständen des Fahrantriebs und des Verbrennungsmotors a und passt über einen Stelleingriff j das maximale Fördervolumen der Hydraulikpumpe an.

## Patentansprüche

1. Mobile Arbeitsmaschine, insbesondere Flurförderzeug, mit mindestens einer Hydraulikpumpe zur Versorgung mindestens eines Verbrauchers, insbesondere einer Arbeitshydraulik, wobei die Hydraulikpumpe mit einem einen drehzahlabhängigen Drehmomentverlauf aufweisenden Verbrennungsmotor in einer zum Antrieb vorgesehenen Verbindung steht, wobei die Hydraulikpumpe im Drehmoment derart regelbar ausgebildet ist, dass ihr Drehmoment an den Drehmomentverlauf des Verbrennungsmotors anpassbar ist
**dadurch gekennzeichnet,**
**dass** die Hydraulikpumpe im Fördervolumen verstellbar ist und zur Drehmomentregelung der Hydraulikpumpe das Fördervolumen auf einen veränderlich einstellbaren Maximalwert begrenzbar ist.

2. Mobile Arbeitsmaschine nach Anspruch 1,
**dadurch gekennzeichnet,**
**dass** der Maximalwert des Fördervolumens elektrisch einstellbar ist.

3. Mobile Arbeitsmaschine nach Anspruch 1 oder 2,
**dadurch gekennzeichnet,**
**dass** die Hydraulikpumpe als Axialkolbenmaschine mit schwenkbarer Schrägscheibe ausgebildet ist und zur Einstellung des maximal zulässigen Fördervolumens der Hydraulikpumpe der Schwenkwinkel der Schrägscheibe auf einen veränderlich einstellbaren Maximalwert begrenzbar ist.

4. Mobile Arbeitsmaschine nach einem der Ansprüche 1 bis 3,
**dadurch gekennzeichnet,**
**dass** mindestens eine Steuereinheit vorgesehen ist, die in Wirkverbindung mit einem Motorsteuergerät des Verbrennungsmotors und mit einer Einstelleinrichtung der Hydraulikpumpe zur Einstellung des maximal zulässigen Fördervolumens der Hydraulikpumpe steht.

5. Mobile Arbeitsmaschine nach Anspruch 4,
**dadurch gekennzeichnet,**
**dass** die Steuereinheit zusätzlich in Wirkverbindung mit einer Fahrantriebseinheit der mobilen Arbeitsmaschine steht.

6. Verfahren zum Betreiben einer mobilen Arbeitsmaschine, insbesondere eines Flurförderzeugs, wobei mindestens eine Hydraulikpumpe zur Versorgung mindestens eines Verbrauchers, insbesondere einer Arbeitshydraulik, von einem Verbrennungsmotor mit einem drehzahlabhängigen Drehmomentverlauf angetrieben wird,
**dadurch gekennzeichnet,**
**dass** die Hydraulikpumpe im Drehmoment derart geregelt wird, dass ihr Drehmoment an den Drehmomentverlauf des Verbrennungsmotors angepasst wird wobei eine Hydraulikpumpe mit verstellbarem Fördervolumen verwendet wird und das Drehmoment der Hydraulikpumpe an den Drehmomentverlauf des Verbrennungsmotors angepasst wird, indem das verstellbare Fördervolumen der Hydraulikpumpe auf einen von der Drehzahl des Verbrennungsmotors abhängigen Maximalwert begrenzt wird

7. Verfahren nach Anspruch 6,
**dadurch gekennzeichnet,**
**dass** eine als Axialkolbenmaschine mit schwenkbarer Schrägscheibe ausgebildete Hydraulikpumpe verwendet wird und zur Einstellung des maximalen Fördervolumens der Hydraulikpumpe der maximal zulässige Schwenkwinkel der Schrägscheibe in Abhängigkeit von der Drehzahl des Verbrennungsmotors begrenzt wird.

8. Verfahren nach Anspruch 6 oder 7,
**dadurch gekennzeichnet,**
**dass** eine hydraulisch im Fördervolumen verstellbare Hydraulikpumpe verwendet wird und zur Drehmomentregelung der Hydraulikpumpe der hydraulischen Verstellung des Fördervolumens eine Regelung des zulässigen Maximalwerts des Fördervolumens in Abhängigkeit von der Drehzahl des Verbrennungsmotors überlagert wird.

9. Verfahren nach Anspruch 8,
**dadurch gekennzeichnet,**
**dass** bei Verwendung einer Axialkolbenpumpe mit hydraulisch schwenkbarer Schrägscheibe als verstellbare Hydraulikpumpe der hydraulischen Schwenkwinkelverstellung eine elektroproportionale Schwenkwinkelregelung zur Begrenzung des Schwenkwinkels auf einen maximal zulässigen Wert in Abhängigkeit von der Drehzahl des Verbrennungsmotors überlagert wird.

## Claims

1. Mobile work machine, in particular industrial truck, with at least one hydraulic pump for supplying at least one consumer, in particular working hydraulics, the hydraulic pump being drive-connected to an internal combustion engine having a speed-dependent torque profile, the hydraulic pump having the capacity for torque regulation such that its torque can be matched to the torque profile of the internal combustion engine, **characterized in that** the hydraulic pump has an adjustable delivery volume and the delivery volume can be limited to a variable maximum value for torque regulation of the hydraulic pump.

2. Mobile work machine according to Claim 1, **characterized in that** the maximum value of the delivery volume can be set electrically.

3. Mobile work machine according to Claim 1 or 2, **characterized in that** the hydraulic pump is in the form of an axial piston machine with a pivotable swashplate, and the pivoting angle of the swashplate can be limited to a variable maximum value in order to adjust the maximum permissible delivery volume of the hydraulic pump.

4. Mobile work machine according to one of Claims 1 to 3, **characterized in that** at least one control unit is provided, which is operatively connected to a motor control device of the internal combustion engine and to an adjusting device of the hydraulic pump for adjusting the maximum permissible delivery volume of the hydraulic pump.

5. Mobile work machine according to Claim 4, **characterized in that** the control unit is additionally operatively connected to a traction drive unit of the mobile work machine.

6. Method for operating a mobile work machine, in particular an industrial truck, at least one hydraulic pump for supplying at least one consumer, in particular working hydraulics, being driven by an internal combustion engine with a speed-dependent torque profile, **characterized in that** the hydraulic pump is regulated in terms of its torque in such a way that its torque is matched to the torque profile of the internal combustion engine, a hydraulic pump with an adjustable delivery volume being used and the torque of the hydraulic pump being matched to the torque profile of the internal combustion engine by virtue of the adjustable delivery volume of the hydraulic pump being limited to a maximum value which is dependent on the speed of the internal combustion engine.

7. Method according to Claim 6, **characterized in that** a hydraulic pump in the form of an axial piston machine with a pivotable swashplate is used, and the maximum permissible pivoting angle of the swashplate is limited depending on the speed of the internal combustion engine so as to adjust the maximum delivery volume of the hydraulic pump.

8. Method according to Claim 6 or 7, **characterized in that** a hydraulic pump which can be adjusted hydraulically in terms of the delivery volume is used, and regulation of the permissible maximum value of the delivery volume depending on the speed of the internal combustion engine is superimposed on the hydraulic adjustment of the delivery volume for torque regulation of the hydraulic pump.

9. Method according to Claim 8, **characterized in that**, when using an axial piston pump with a hydraulically pivotable swashplate as adjustable hydraulic pump, an electrically proportional pivoting angle regulation for limiting the pivoting angle to a maximum permissible value depending on the speed of the internal combustion engine is superimposed on the hydraulic pivoting angle adjustment.

## Revendications

1. Machine de travail mobile, notamment chariot de manutention, comprenant au moins une pompe hydraulique pour alimenter au moins une charge, notamment un dispositif hydraulique de travail, la pompe hydraulique se trouvant dans une liaison prévue pour l'entraînement avec un moteur à combustion qui présente une courbe de couple dépendante de la vitesse de rotation, la pompe hydraulique étant configurée pour pouvoir réguler son couple de telle sorte que celui-ci soit adaptable à la courbe de couple du moteur à combustion, **caractérisée en ce que** le débit volumique de la pompe hydraulique est réglable et, pour réguler le couple de la pompe hydraulique, le débit volumique peut être limité à une valeur maximale réglable variable.

2. Machine de travail mobile selon la revendication 1, **caractérisée en ce que** la valeur maximale du débit volumique peut être réglée électriquement.

3. Machine de travail mobile selon la revendication 1 ou 2, **caractérisée en ce que** la pompe hydraulique est réalisée sous la forme d'une machine à piston axial avec plateau oscillant pivotant et l'angle de pivotement du plateau oscillant peut être limité à une valeur maximale réglable variable afin de régler le débit volumique maximum autorisé de la pompe hydraulique.

4. Machine de travail mobile selon l'une des revendications 1 à 3, **caractérisée en ce qu'**il est prévu au moins une unité de commande qui se trouve en liaison active avec un contrôleur de moteur du moteur à combustion et avec un dispositif de réglage de la pompe hydraulique pour régler le débit volumique maximum autorisé de la pompe hydraulique.

5. Machine de travail mobile selon la revendication 4, **caractérisée en ce que** l'unité de commande se trouve en plus en liaison active avec une unité d'entraînement de déplacement de la machine de travail mobile.

6. Procédé pour faire fonctionner une machine de travail mobile, notamment un chariot de manutention, au moins une pompe hydraulique destinée à alimenter au moins une charge, notamment un dispositif hydraulique de travail, étant entraînée par un moteur à combustion qui présente une courbe de couple dépendante de la vitesse de rotation, **caractérisé en ce que** le couple de la pompe hydraulique est régulé de telle sorte qu'il soit adaptable à la courbe de couple du moteur à combustion, la pompe hydraulique utilisée étant à débit volumique réglable et le couple de la pompe hydraulique étant adaptée à la courbe de couple du moteur à combustion **en ce que** le débit volumique réglable de la pompe hydraulique est limité à une valeur maximale qui dépend de la vitesse de rotation du moteur à combustion.

7. Procédé selon la revendication 6, **caractérisé en ce que** la pompe hydraulique utilisée est réalisée sous la forme d'une machine à piston axial avec plateau oscillant pivotant et l'angle de pivotement maximum autorisé du plateau oscillant est limité en fonction de la vitesse de rotation du moteur à combustion afin de régler le débit volumique maximum de la pompe hydraulique.

8. Procédé selon la revendication 6 ou 7, **caractérisé en ce que** la pompe hydraulique utilisée présente un débit volumique réglable de manière hydraulique et, pour réguler le couple de la pompe hydraulique, une régulation de la valeur maximale autorisée du débit volumique en fonction de la vitesse de rotation du moteur à combustion est superposée au réglage hydraulique du débit volumique.

9. Procédé selon la revendication 8, **caractérisé en ce que** lors de l'utilisation d'une pompe à piston axial avec plateau oscillant à pivotement hydraulique en tant que pompe hydraulique réglable, une régulation électrique proportionnelle de l'angle de pivotement destinée à limiter l'angle de pivotement à une valeur maximale autorisée en fonction de la vitesse de rotation du moteur à combustion est superposée au réglage hydraulique de l'angle de pivotement.
